Europäisches Patentamt

European Patent Office

Office européen des brevets

(11) Publication number: **0 135 133**

**B1**

(12) EUROPEAN PATENT SPECIFICATION

(45) Date of publication of patent specification: **10.01.90**

(21) Application number: **84109621.7**

(22) Date of filing: **13.08.84**

(51) Int. Cl.⁵: **B 21 B 1/02**

(54) Method of and apparatus for continuously hot-rolling steel pieces.

(30) Priority: **12.08.83 JP 146444/83**
**21.05.84 JP 100544/84**

(43) Date of publication of application:
**27.03.85 Bulletin 85/13**

(45) Publication of the grant of the patent:
**10.01.90 Bulletin 90/02**

(84) Designated Contracting States:
**DE FR GB IT SE**

(56) References cited:
**DE-B-1 003 164**
**DE-B-1 056 454**
**DE-B-1 095 426**
**DE-C- 726 541**
**FR-A-1 120 868**
**FR-A-1 120 911**
**JP-A-51 059 748**
**US-A-2 533 605**
**US-A-3 059 096**

(73) Proprietor: **HITACHI, LTD.**
**6, Kanda Surugadai 4-chome Chiyoda-ku**
**Tokyo (JP)**

(72) Inventor: **Kajiwara, Toshiyuki**
**22-11, Kujicho-5-chome**
**Hitachi-shi (JP)**
Inventor: **Kimura, Tomoaki**
**6-8, Osecho-4-chome**
**Hitachi-shi (JP)**
Inventor: **Nihei, Mitsuo**
**4-16-3, Onumacho**
**Hitachi-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

The invention relates to a method and an apparatus for continuous hot-rolling of steel pieces according to the first part of Claim 1 and 6, respectively. The term "steel pieces" is used in this specification to broadly mean pieces of steel such as slabs, blooms billets and semi-finished steel bars and rods.

The JP—A—22500/1980 discloses a continuous rolling method in which a plurality of slabs of a predetermined length produced by a continuous casting apparatus are passed through a stationary bonding apparatus which is operative to bond the trailing end of a preceding slab to the leading end of a succeeding slab to form a continuous web which is then rolled continuously through a hot-rolling line.

This continuous rolling method, however, can hardly be applied to a practical hot-rolling mill due to the following reasons:

The slab entering the hot-rolling mill has a thickness of about 200 mm. The slab thickness is still as large as 30 to 60 mm even at the inlet side of finishing rolls. It is impossible to bond the opposing ends of such thick slabs by means of a stationary bonding apparatus.

To explain in more detail, the yield from the continuous casting equipment per strand is equal to approximately 1/4 to 1/3 of the yield from the hot-rolling mill, so that it is necessary to successively feed 3 to 4 strands of slabs into the hot-rolling mill. Namely, in the actual hot-rolling mill, a plurality of slabs cut in a suitable length are successively fed into the hot-rolling mill in a short period of time. In general, however, the rolling of one piece of slab can be finished in quite a short time period of 1 minute or so at the longest. In order to bond the opposing leading and trailing ends of successive slabs in such a short period of time, therefore, the bonding operation has to be conducted while the slabs are being moved. This requirement cannot be met by a bonding apparatus of the stationary type.

Pressure welding is one of possible practical methods for bonding successive hot slabs. A pressure welding of slabs by merely pressing the opposing ends of slabs, however, requires a long time due to conditions such as the cross-sectional shape, scales and the like.

The JP—A—59748/1976 discloses a hot-rolling method, in which the lengthwise leading and trailing ends of each of successive slabs are sheared in the widthwise direction such that each sheared surface makes a predetermined angle (20 to 85°) to the slab surface. The sheared surfaces are then descaled and the descaled adjacent ends of successive slabs are then pressed together rolled while the slabs are rolled, whereby the slabs are bonded into a long continuous web. In this known method, it is essential that the shearing of the slab ends has to be made precisely at a predetermined angle of 20 to 85°. It is quite difficult to attain such a high precision of shearing during a rolling operation, so that the shearing has to be conducted in off-line operation at the inlet side of a heating furnace. Thus, the shearing of the ends of a running slab with such a high precision of shearing surface angle is extremely difficult to perform. According to this method, moreover, successive slabs are fed into rolls so that the adjacent ends of the slabs are pressed to each other. It is difficult to precisely determine the factors, such as the pressing force and the reduction ratio, which are required to precisely bond slabs.

The DE—A—1 095 426 discloses a method and an apparatus according to the first part of Claim 1 or 6, comprising a movable welding device including an inductor for heating the leading and trailing ends of two successive transported steel pieces. A first axially movable gripping device is disposed before the heating inductor for gripping the leading end of an incoming steel piece and a second gripping device is stationary disposed behind the heating device for holding the trailing end of the forehand steel pieces. For producing the welding connection the both heated ends of the two successive steel pieces are pressed together by moving the first gripping means in the axial direction. But in this method the time for heating up the slab ends to the welding temperature is long and the energy consumption is high. Further problems occur on the reasons of the rounded or unregularly shaped end faces of the steel pieces. For overcoming these problems it is known from FR—A—1 120 911 to cut the end portions of the steel pieces before welding by shearing means.

It is the object of the invention to provide a continuous steel hot-rolling method and apparatus which permit bonding of hot steel pieces in a short period of time thereby affording a continuous hot rolling of steel slabs.

This object will be solved according to the invention by the steps and features according to Claim 1 (method) and Claim 6 (apparatus).

Brief description of the drawings

Fig. 1 is a schematic illustration of an embodiment of a continuous steel hot-rolling apparatus in accordance with the invention;

Fig. 2 is a schematic illustration of another embodiment of the continuous steel hot-rolling apparatus in accordance with the invention;

Fig. 3 is a sectional view of a mobile steel piece bonding device incorporated in the continuous steel hot-rolling apparatus shown in Fig. 1 or 2;

Fig. 4 is a fragmentary plan view of the bonding device shown in Fig. 3;

Fig. 5 is a sectional view taken along the line V—V in Fig. 3;

Fig. 6 is a diagram showing an adequate range of the temperature to which the ends of steel pieces to be bonded are heated and the pressing force required for the bonding;

Fig. 7 is a schematic illustration of a high-frequency heating means incorporated in the bonding device shown in Fig. 3;

Fig. 8 is a schematic illustration of a looping pit used for the continuous hot-rolling apparatus shown in Fig. 2; and

Fig. 9 is a fragmentary plan view of a modification another example of the mobile steel piece bonding device incorporated in the continuous hot-rolling apparatus shown in Fig. 1 or 2.

Description of the preferred embodiments

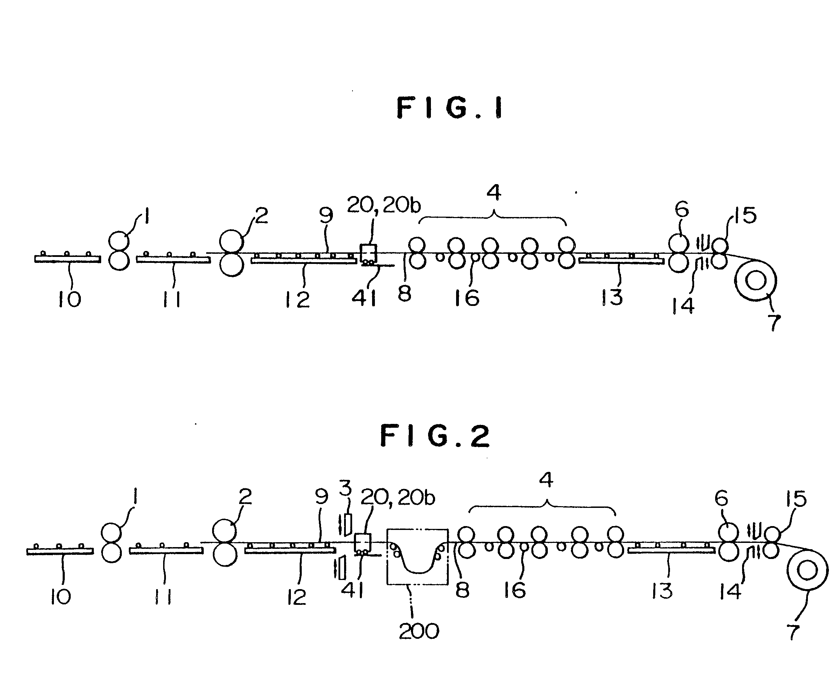

An embodiment of a continuous steel hot-rolling apparatus of the invention will be described hereinunder with reference to Figs. 1 to 4.

Referring first to Fig. 1, the continuous steel hot-rolling apparatus of the invention includes first and second roughing mills 1 and 2 through which a slab corresponding to one strand of material supplied from a continuous casting apparatus (not shown) is rolled roughly in the hot state. The apparatus further includes a series of finishing mills 4, a looper 16 disposed in the series of finishing mills 4, pinch rollers 6, 15 disposed at the inlet side of a down coiler 7, and a flying shear 14 adapted to shear the strip. Numerals 10, 11, 12 and 13 denote roller tables on which the slab and the strip run. The series of finishing mills 4 usually has five to seven mills and the strip is rolled simultaneously through all finishing mills. A reference numeral 20 designates a bondnig device operative to bond a preceding slab 8 and a succeeding slab 9 while they are running. The bonding device 20 is capable of moving a predetermined distance along the path of travel of the slabs.

The bonding device will be explained in more detail hereinunder.

The heat possessed by the slabs heated to 1000 to 1100°C can suitably be used in bonding the hot slabs to each other. The bonding of moving slabs for continuous rolling, however, has the following requirements:

(1) In order to minimize the distance of movement of the bonding device, it is necessary that the bonding of the travelling slabs has to be done in a short period of time, say within 20 seconds or so; and

(2) The bonding should assure such a bonding strength as to prevent separation of the bonded slabs from each other during the subsequent finish rolling by the finishing mill.

Unfortunately, however, a mere press bonding pressure welding by making use of only the heat possessed by the hot slabs cannot completely meet these requirements. Namely, since the slabs to be hot-rolled have a temperature of 1000 to 1100°C at the bonding station, these slabs possess considerably large quantity of heat. If the slabs can be press-bonded or pressure-welded solely by this heat, no additional supply of energy will be needed.

From this point of view, the inventors conducted an experiment using a miniaturized model of the slab, having a thickness of 9 mm and a width of 60 mm, and found that the slabs could not be satisfactorily bonded solely by the heat originally possessed by the slabs and with the bonding pressure of up to 3.06 bar. It would be possible to increase the pressing force to a level of 5.1 to 10.2 bar. If, however, such a large pressing force is to be applied to in the actual slab which is typically 50 mm thick, 1500 mm wide and 50 to 80 m long, the necessary pressing load will amount to: $(50 \times 1500)$ mm$^2 \times (5.1$ to $10.2)$ bar$=36,775$ to $73,550$ N. In order to exert such a large force, the bonding device must be of an impractically large size. In addition, such a large force will cause the hot slab to be bent undesirably. Moreover, it will be almost impossible to drive such a large-sized bonding device along the path of travel of the slab.

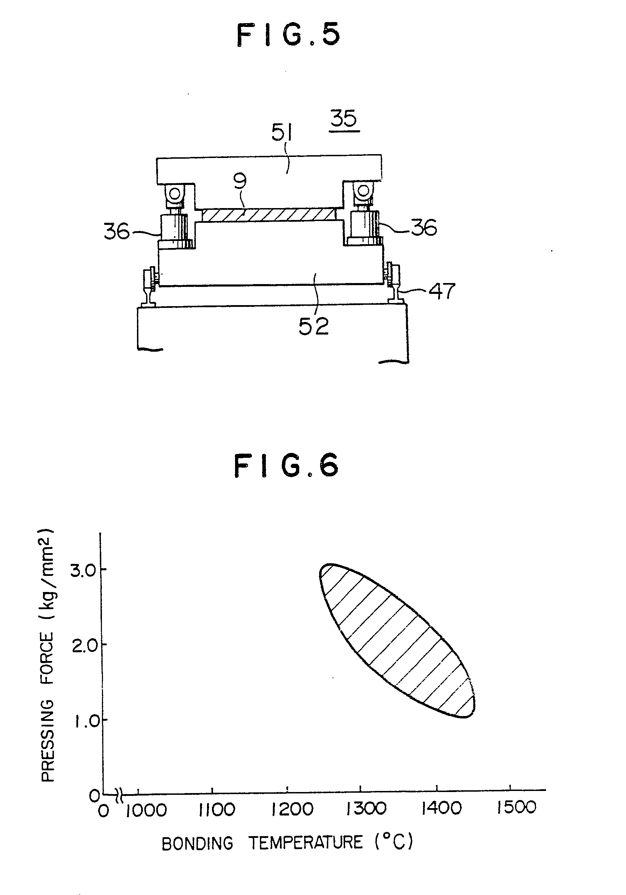

Under this circumstance, the inventors have found that the ends of the travelling slabs can satisfactorily be bonded to each other by using a bonding device having a means capable of heating the ends of slabs in a short time and a pressing device by which the slab ends are pressed to each other. The inventors conducted various experiments using slab models explained before and confirmed that a good bonding can be attained when the heating temperature and the pressing force are determined to fall within the hatched area of the diagram shown in Fig. 6. Namely, for attaining a good binding of slabs, the temperature of the slab ends should range from 1250 to 1450°C. It will be seen appreciated that the lower the temperature is, the greater the pressing force should be. In other words, the bonding can be performed with a smaller pressing force if the slab ends are heated to a high temperature. Anyway, in order that the slabs may be bonded to each other, it is necessary that the slabs are heated nearly to the melting point of the material of the slabs and then pressed to each other with a suitable pressing force.

Various heating means are conceivable as the heating means for use in the bonding device. A suitable example of such heating means is a high-frequency induction heating means. It has been found that, by adequately selecting the capacity of the high-frequency power source, it is possible to heat the ends of the hot slabs (1000 to 1100°C) up to the temperature suitable for the bonding, i.e., from 1250 to 1450°C, in quite a short time period of from 5 to 20 seconds.

The following three types of bonding are conceivable:

(a) Perfect bonding (bonding over the entire slab end surfaces);

(b) Bonding only at the peripheral parts of slab end; and

(c) Bonding only at the central portions of slab end surfaces.

The perfect bonding (a) is most preferred in order to attain a good bonding which is strong enough to prevent separation of slabs in the finishing rolling step. This, however, uneconomically requires a large consumption of electric power as well as a long heating time. As to the peripheral bonding (b), a test conducted with an actual slab of 100 mm thick and 1400 mm wide showed that, with a small peripheral bonding ratio (welding ratio) of 30%, the slabs could be rolled without separation of slabs the final sheet bar. The central bonding (c) mentioned above is not preferred because of a large possibility of separation of slabs during hot-rolling due to the surface notch effect.

Thus, from view point of economy and time, the peripheral bonding (b) is most preferred. Obviously, this way of bonding can be conveniently conducted by high-frequency induction heating which best suits to the heating of only the peripheral parts of slabs. In fact, this heating method makes it possible to bond steel slabs within a short time period of from 5 to 20 seconds even in the atmosphere, thus contributing to the improvement in the efficiency and economy in the continuous hot-rolling of steel slabs.

As a practical means for bonding hot slab ends, the invention proposes a bonding device which utilizes a metallic material having a melting point lower than the slab material and adapted to be placed between the end surfaces of the slabs to be bonded. With the low melting point material sandwiched between the slab end surfaces, the end portions of the slabs are heated either by applying an electric voltage across the slab ends to concentrically heat the interface or by other methods, whereby the low melting point metal is molten. Simultaneously the slab ends are urged together to expel the unnecessary liquid phase metal by the pressure developed to thereby weld the slab end surfaces. Thus, this bonding device includes a heating means, means for placing the low melting point metal and means for pressing the slabs one against the other. This bonding device is operable to bond slabs in a short period of time, e.g., several seconds, even in the atmospheric air. Furthermore, this bonding device can be used to bond slabs of different materials.

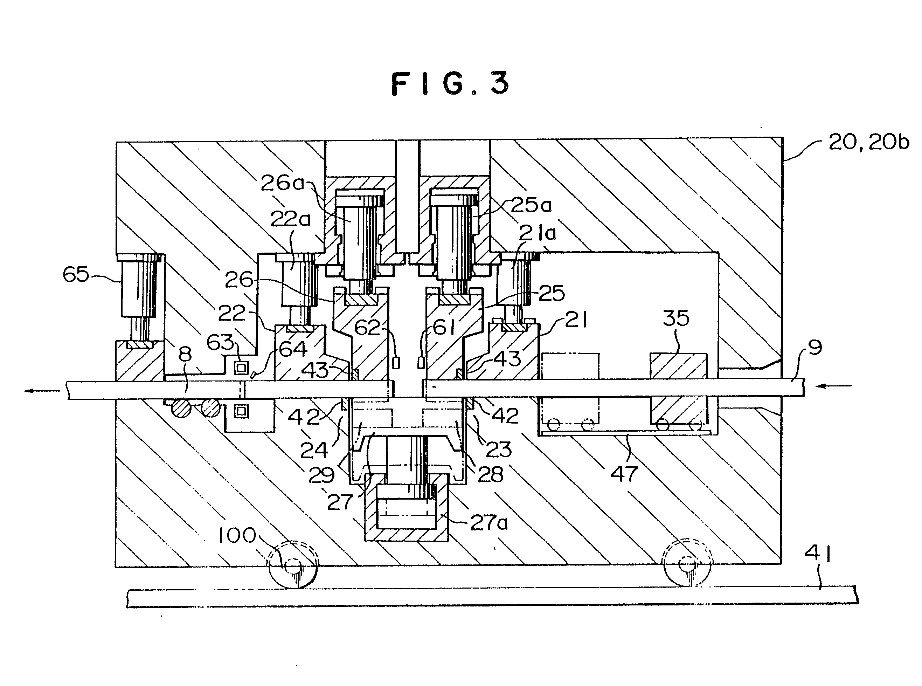

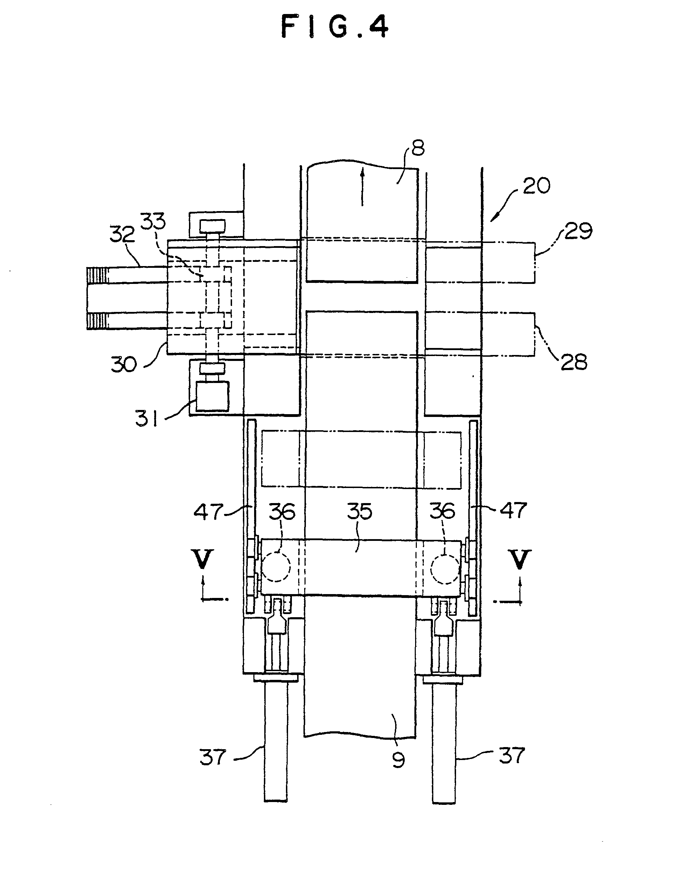

An example of the bonding device incorporating the aforementioned high-frequency induction heating means, suitable for use in the continuous hot-rolling apparatus of the invention, will now be described hereinunder with specific reference to Figs. 3 and 4.

Referring first to Fig. 3, a mobile bonding device 20 in the form of a carrier which has wheels 100 adapted to roll on rails 41 which are laid along the path of travel of slabs to be rolled. Thus, the device 20 is capable of moving in synchronism with the travel of slabs. The device 20 has a pair of strip holding devices 22 and 21 which are respectively adapted to hold the trailing end portion of a preceding slab 8 and the leading end of a succeeding slab 9. These holding devices 22 and 21 are adapted to operate, respectively, in response to signals from detectors 62 and 61 which detect the trailing end of the preceding slab 8 and the leading end of the succeeding slab 9. On receipt of these signals, hydraulic cylinders 22a and 21a in the holding devices are actuated to clamp and fix the ends of the slabs 8 and 9.

A shearing device is disposed between both holding devices 21 and 22. The shearing device is constituted by a pair of lower cutter holders 23 and 24 both having shearing cutters 42, and a pair of upper cutter holders 25 and 26 both having shearing cutters 43. The upper cutter holders 25 and 26 are adapted to be driven downwardly by the operation of hydraulic cylinders 25a and 26a so as to vertically shear the trailing end of the preceding slab 8 and the leading end of the succeeding slab 9 to sever predetermined lengths of the slab ends. In order to ensure a smooth shearing operation, an anvil 27 is disposed under the upper cutter holders 25 and 26 and below the slabs 8 and 9. The anvil 27 is supported by a hydraulic cylinder 27a which operates to lower the anvil 27 in synchronism with the lowering of the upper cutter holders 25 and 26 so that the anvil 27 supports the slab ends to impart a predetermined force to the slab ends while the anvil 27 is lowered.

As will be seen in Fig. 4, a crop pusher device 30 is disposed between the lower cutter holders 23 and 24. The crop pusher device 30 has a motor 31, a rack 32 and a pinion 33 engaged therewith so that the pinion 33 is rotated by the motor to drive the rack 32 and a pusher member of the crop pusher device in the direction perpendicular to the direction of travel of the slabs, whereby the severed ends, i.e., crops, are pushed by the crop pusher device 30 laterally away from the path of travel of the slabs to assure that the crops may not cause any hindrance to the succeeding bonding operation.

After the shearing of the ends of the slabs 8 and 9 by the shearing device and after the removal of the crops by the crops pusher device 30, the slabs 8 and 9 are moved to a position in which the trailing end of the preceding slab 8 and the leading end of the succeeding slab 9 come to the region of a high-frequency heating device 63 which is, in this embodiment, a high-frequency induction heating device as illustrated. Then, the heating device 63 heats up the slab ends to a predetermined temperature of from 1250 to 1450°C as mentioned before. When the temperature rise of the slab ends to the above-mentioned temperature by a temperature sensor 64, a clamp cylinder 65 is actuated to clamp the preceding slab 8 and, thereafter, a pressing device 35 shown in Figs. 4 and 5 operates to press the succeeding slab 9 against the preceding slab 8. The pressing device 35 is composed of upper and lower pressing plates 51 and 52 for clamping the slab 9 from the upper and lower sides thereof, hydraulic cylinders 36 for adjusting the clearance between these pressing plates 51 and 52, hydraulic cylinders 37 operable in the direction of movement of the slabs to urge the leading end surface of the succeeding slab 9 against the trailing end surface of the preceding slab 8, and rails 47 along which the pressing device 35 as a whole is moved in response to the operation of the hydraulic cylinders 37.

A description will be made hereinunder as to the operation of the above-described mobile bonding device used on to bond steel pieces which are in the form of steel strips each having a thickness of 60 mm.

Referring to Fig. 3, the bonding device 20 is moved on along the rails 41 at a speed of 30 m/min to follow-up the travelling strips so as to locate the trailing end of the preceding strip 8 and the leading end of the succeeding strip 9 to the shearing position. Then, the hydraulic cylinders 21a and 22a are operated to clamp the ends of the strips 8 and 9 by the strip holding devices 21 and 22. This clamping operation takes about 4 seconds. Then, the shearing device constituted by the lower cutter holders 23 and 24 and the upper cutter holders 25 and 26 is actuated to shear the trailing end of the preceding strip 8 and the leading end of the succeeding strip 9 simultaneously or within quite a short time lag to form precisely sheared end surfaces on both strips 8 and 9. This shearing operation takes about 4 seconds. The shearing is conducted by cooperation of the lower cutter holders 23 and 24 and the upper cutter holders 25 and 26 which are driven downwardly by the hydraulic cylinders 25a and 26a. During the shearing, a predetermined supporting force is applied to the strips by the anvil 27 which is actuated by the hydraulic cylinder 27a downwardly in synchronism with the operation of the hydraulic cylinders 25a and 26a so that the ends of the strips 8 and 9 to be sheared are clamped by the upper cutter holders 25 and 26 and the anvil 27.

As a result of the shearing which takes about 4 seconds, crops 28 and 29 are severed from the ends of the strips 8 and 9 as indicated by two-dot-and-dash lines. These crops 28 and 29 are pushed horizontally and laterally, i.e., in the direction perpendicular to the direction of travel of the strips away from the path of the strips by the operation of the crop pusher device 30 which includes the motor 31, the rack 32 and the pinion 33 as stated before.

After the shearing of the trailing end of the preceding strip 8 and the leading end of the succeeding strip 9, the crops 28 and 29 are pushed away as explained above. Then, the strip holding device 22 releases the preceding strip 8 and the running speed of the bonding device 20 is controlled so as to bring the trailing end of the preceding strip 8 to the region under the influence of the high-frequency heating device 63. Subsequently, the strip holding device 21 releases the following strip 9 and, with the pressing plates 51 and 52 of the pressing device 35 clamping the strip 9 therebetween, the hydraulic cylinder 37 of the pressing device 37 is operated to drive the succeeding strip 9 forwardly until the sheared end surface of the strip 9 is brought either into slight contact with the sheared end surface of the preceding strip 8 in the region of the high-frequency heating device 63 or to a position slightly spaced from the trailing end of the preceding strip 8. Then, the high-frequency heating device 63 is energized so that the trailing end of the preceding strip 8 and the leading end of the succeeding strip 9 are heated to a temperature of from 1250 to 1450°C. Then, the preceding strip 8 is clamped by the clamp 65 and the hydraulic cylinder 37 is further operated to press the leading end surface of the succeeding strip 9 against the trailing end surface of the preceding strip 8 for thereby welding and bonding these strips 8 and 9 to each other. The welding itself can be completed in quite a short time period of 0.5 to 1 second, but this bonding operation including the heating requires a time length of 5 to 20 seconds in total. The pressing force is preferably not greater than 3.06 bar.

After the bonding of the strips 8 and 9, the bonded strips are unclamped. The unclamping is completed in 2 seconds.

The bonding operation, however, involves other miscellaneous works. For instance, in the case where the high-frequency heating device 63 is of the type which supplies high-frequency current directly to the strips, it is necessary to move electrodes or terminals into and out of contact with the strips at a suitable timing. In addition, it is necessary to trim the sheared end surfaces of the strips. The trimming takes about 5 seconds.

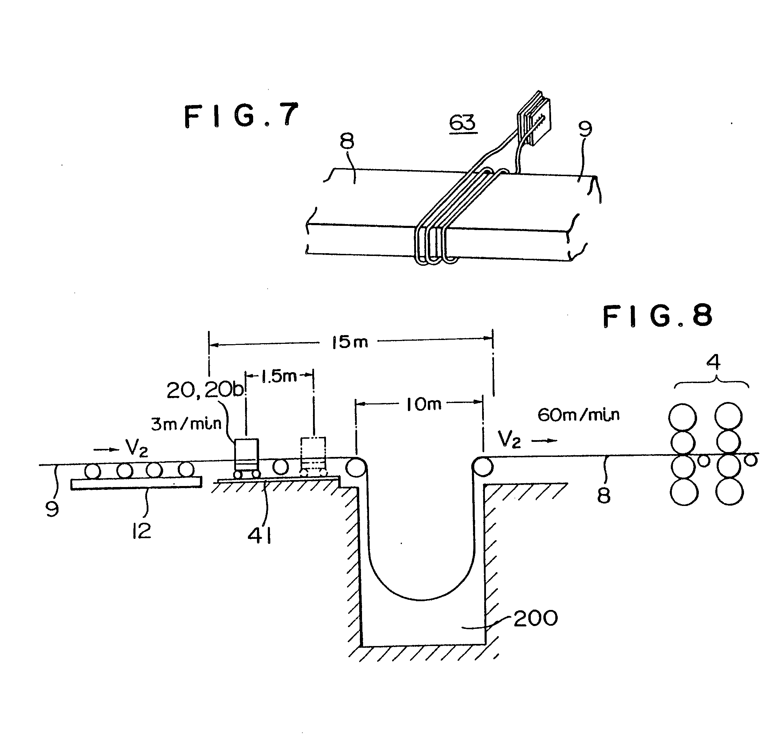

The high-frequency heating device 63 used in the described embodiment is schematically shown in Fig. 7.

After the unclamping of the bonded strips 8 and 9, the bonding device 20 is moved backwardly to the starting position at a speed of 90 m/min to prepare for the next bonding operation.

Thus, the bonding of the strips of 60 mm thick can be completed in a short time which is given as the sum of the time periods required for the respective steps of operation; namely, (i) 4 seconds for holding of two strips, (ii) four seconds for shearing of strip ends, (iii) 5 to 20 seconds for welding including heating and pressing, (iv) 2 seconds for unclamping and (v) 5 seconds for miscellaneous steps. The total is from 20 to 35 seconds.

Considering the fact that the running speed of the preceding strip 8 of 60 mm thick is 30 m/sec, the bonding device 20 requires a stroking space of 10 to 17.5 m long in order to carry out the above-described bonding operation. Thus, the bonding device 20 completes each bonding operation within a time period while the device 20 travels a distance of 17.5 m at the maximum at the same speed as the strip, i.e., 30 m/min. Thereafter, the device 20 is moved backward at a high speed of 90 m/sec to the starting position to prepare for the next bonding operation.

The continuous web formed by the bonded strips is introduced into the finishing mills 4 and continuously rolled into the final size, as will be seen in Fig. 1.

Fig. 2 shows another embodiment of the continuous steel hot-rolling apparatus of the invention, which is suitable for use in the case where the steel strip is relatively thin (for example, thickness of 30 mm) and has a length of from 50 to 80 m. In this embodiment, in order to reduce the stroke or running distance of the bonding device 20, a looping device 200 capable of storing a predetermined length of the preceding strip 8 is disposed at the inlet side of the finishing mills 4.

Since the thin strip has a high flexibility, the looping device 200 may be in the form of a looping pit as shown in Fig. 8. By using such a looping pit, the dimension of the looping device 200 in the strip running direction may be reduced to 10 m or so, although the looping pit 200 should be large enough to accomodate about 35 m of the strip 8. It will be seen that, because the length of the strip stored in the looping device 200 can be increased by increasing the depth of the looping pit 200, the running speed and distance of the carrier 20 can be decreased correspondingly. Namely, in this embodiment, the bonding device 20 is allowed to run at a very low speed (for example, about 3 m/min) which is not equal to the high speed of, for example, 60 m/min at which the preceding strip 8 is drawn into the finishing mills 4. Although the amount or length of the preceding strip 8 stored in the looping device 200 is progressively decreased due to the difference between the speed at which the strip 8 is drawn into the finishing mills 4 and the speed at which the bonding device 20 is moved, no problem occurs if the bonding operation, which is finished in 20 to 35 seconds as explained before, is completed before the stock of the strip 8 in the looping device 200 is consumed. Namely, since the preceding strip 8 drawn by the finishing rolls at the speed of 60 m/min runs a distance of 35 m at the maximum until one bonding step is completed within the maximum time period of 35 seconds, the looping pit 200 may be designed to store a length of 35 m of the preceding strip 8.

The following fact is to be noted in connection with the running speed and distance of the carrier 20. If the succeeding strip 9 at a high temperature is held stationarily on the roller table 12, the strip 9 will be locally cooled at the points of contact with the rollers of the roller table 12 with a resultant undesirable formation of skid marks in the locally cooled portions of the strip. To avoid this problem, it is preferred that the bonding device 20 runs a distance corresponding to the pitch of the rollers of the roller table 12, e.g., 1.5 m within each bonding time period of 20 to 35 seconds. According to such an arrangement, it is possible to decrease the distance to be travelled by the bonding device 20 and, in addition, to prevent undesirable local cooling of the strip 9. In consequence, the overall length required for the bonding operation can be decreased to about 15 m.

Another advantage of the embodiment shown in Fig. 2 is that the construction of the bonding device 20 as a whole can be simplified because it is not necessary to mount the strip shearing device on the bonding device 20. Namely, in this embodiment, the shearing device is disposed between the downstream end of the roller table 12 and the upstream end of the bonding device as viewed in the direction of running of the strips.

A modification of the bonding device will be described hereinunder. The modified device 20b employs, in place of the high-frequency heating device used in the first embodiment, a metal of a low melting point to be placed between the trailing end of the preceding strip and the leading end of the succeeding strip. It will be clear to those skilled in the art that the arrangement of the continuous hot-rolling apparatus as a whole need not be changed except for the substitution of the modified bonding device 20b for the bonding device 20 described before in connection with Figs. 1 and 2.

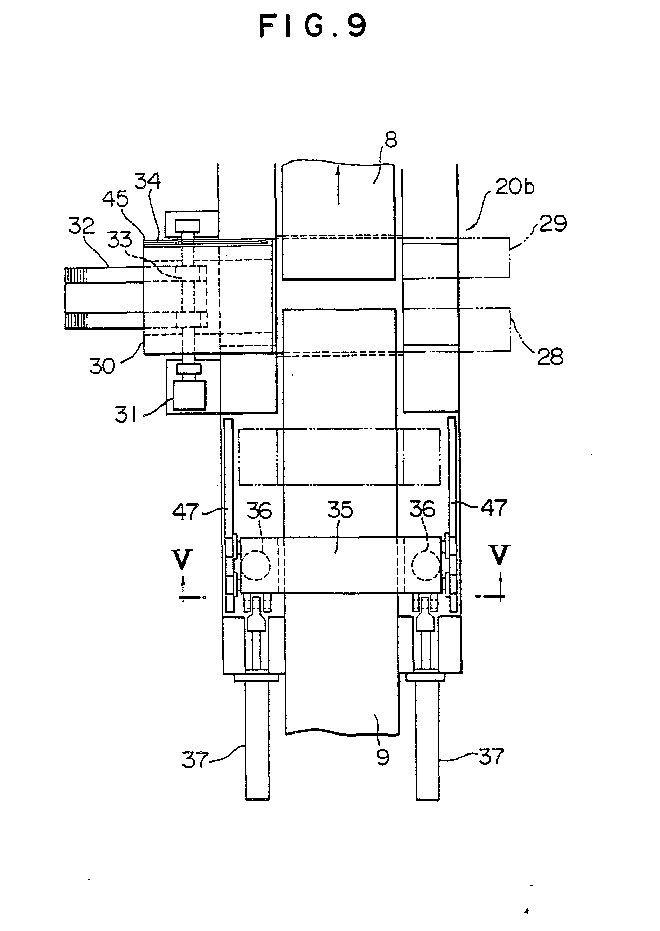

The detail of the bonding device 20b is shown in Fig. 9. The basic arrangement of this bonding device 20b is substantially identical to that of the device 20 explained before, so that the description will be focussed only to the points of difference.

The bonding device 20b shown in Fig. 9 has a crop pusher device 30 disposed between the lower cutter holders 23 and 24 as in the case of the bonding device shown in Fig. 4. The crop pusher 30 is operable in the horizontal direction perpendicular to the direction of travel of the strips, by the power of the motor 31 transmitted through the rack 32 and the pinion 33 as in the case of the crop pusher device of the first embodiment. In the bonding device 20b shown in Fig. 9, however, the crop pushing device 30 has an additional mechanism 45 for feeding a low melting point metal 34 into the gap between the steel strips 8 and 9.

In operation, after the shearing of the ends of the steel strips 8 and 9 and after the removal of the crops by the crop pusher device 30, the low melting point metal 34 is inserted by the mechanism 45 into the gap between the sheared surfaces of both strips 8 and 9. Then the pressing device 35 is operated in the same manner as explained before in connection with Figs. 4 and 5 to drive the succeeding strip 9 forwardly to press the leading end surface thereof against the trailing end surface of the preceding strip 8 to bond these strips with the intermediately of the solder 34.

The low melting point metal may be in the form of foil, powder or granules and have a melting point of, for example, 1000°C which is lower than the temperature of the strips. The low melting point metal is placed between the vertically sheared end surfaces of both strips and then the leading end. surface of the succeeding strip is pressed against the trailing end surface of the preceding strip while these strips having a temperature of 1000 to 1100°C are further heated, so that the low melting point metal is melted and, at the same time, the adjoining surfaces are concentrically heated to a desired temperature by a suitable heating device, which may be a high-frequency induction heating device, to locally melt the adjoining surfaces while expelling unnecessary liquid phase metal by the pressure developed on the adjoining surfaces. Any impurities such as scales on the adjoining surfaces are expelled simultaneously with the removal of the unnecessary liquid phase metal, so that both strips are welded and bonded with a sufficiently high bonding strength.

When the strips to be bonded are of a low-carbon steel or an SUS steel, a Ni-based alloy or an alloy formed by adding a low-melting point alloy element to the material of the strip is used suitably as the low melting point metal.

The pressing force should be selected to be large enough to ensure a sufficient bonding strength to avoid any separation of the strips during the rolling, although a small pressing force is preferred from the view point of minimization of the bead or protrusion which may be formed on the strip material at the juncture between two strips. An experiment showed that a bonding strength equivalent to that of the original strip material can be obtained with a surface pressure of from 5.1 to 10.2 bar. However, considering that the strips are scheduled to be separated again after the finishing rolling, the bonding operation may be effected with surface pressure of less than 5.1 to 10.2 bar.

Assuming here that the bonding surface pressure is from 0.1 to 5.1 bar, the pressing force required for pressing the slab of 30 mm thick and 1500 mm wide is calculated to range from 441.3 to 22065 N.

According to this method, it is possible to attain a sufficiently high bonding strength well approximating the strength of the steel strip material itself within a short period of several seconds and in the atmospheric air.

The operation of the continuous hot-rolling apparatus which employs the mobile bonding device 20b shown in Fig. 9 will be described hereinunder.

After the shearing of the trailing end of the preceding strip 8 and the leading end of the succeeding strip 9, the crops 28 and 29 severed from the strips are pushed laterally away from the path of the travel of the strips and the low melting point metal 34 is put by the mechanism 45 into the gap between the strips 8 and 9. Immediately after the placement of the solder 34, the ends of the strips 8 and 9 are heated by the high-frequency heating device 63 to a desired temperature and, after slightly loosening the strip holding device 21, the hydraulic cylinder 37 of the pressing device 35 is actuated to feed the succeeding strip 9 forwardly to press the leading end surface of the strip 9 against the trailing end of the preceding strip 8 to thereby weld and bond the two strips 8 and 9.

After the strips have been bonded, the strip holding device 22 and the pressing device 35 release the strips and the bonding device 20b is returned to the starting position thus completing one cycle of the bonding operation.

The continuous web formed by the bonded strips is then introduced into the finishing mills 4 of the continuous rolling apparatus as shown in Fig. 1 or 2 so as to be rolled into the final size.

As will be understood from the following description, according to the invention, it is possible to bond successive steel pieces in quite a short period of time, so that it becomes possible to conduct a continuous steel hot-rolling at a high efficiency.

## Claims

1. A continuous steel hot-rolling method in which steel pieces each prepared in a predetermined length and maintained at a high temperature are successively bonded in series to form a continuous train of steel pieces for a continuous rolling by a rolling mill, the method including the steps of:

bringing the trailing end of a preceding hot steel piece and the leading end of a hot succeeding steel piece in close proximity to each other while said steel pieces are travelling on the upstream side of said rolling mill;

heating the trailing end of said preceding steel piece and the leading end of said succeeding steel piece to a desired temperature;

pressing the heated leading end surface of said succeeding steel piece to the heated trailing end surface of said preceding steel piece to bond said steel pieces to thereby form a continuous train of the steel pieces; and

leading said continuous train of said steel pieces into said rolling mill thereby continuously roll said steel pieces, characterised by

shearing the trailing end portion of said preceding steel piece and the leading end portion of said succeeding steel piece while they are held in close proximity to each other; and

prior to said pressing step, placing a metal of a melting point below the melting point of said steel pieces between the sheared trailing end surface of said preceding steel piece and the sheared leading end surface of said succeeding steel piece.

2. A continuous steel hot-rolling method according to Claim 1, wherein said shearing step, said heating step and said pressing step are conducted while said steel pieces are travelled.

3. A continuous steel hot-rolling method according to Claim 1, wherein the sheared end portions of said steel pieces are heated to a temperture ranging between 1250 and 1450°C.

4. A continuous steel hot-rolling method according to Claim 1, wherein a high-frequency heating is utilized for the heating of the sheared end portions of said steel pieces.

5. A continuous steel hot-rolling method according to Claim 1, further including the step of storing a predetermined length of said preceding steel piece on the upstream side of said rolling mill to absorb the difference between the speed at which said preceding steel piece is introduced into said rolling mill and the speed at which said steel pieces are moved during bonding thereof.

6. A continuous steel hot-rolling apparatus capable of successively bonding a plurality of steel pieces (8, 9) each prepared in a predetermined length and maintained at a high temperature so as to form a continuous strain on the steel pieces for a continuous rolling by a rolling mill, said apparatus including:

steel piece holding means (21, 22) for holding the training end of a preceding steel piece (8) and the leading end of a succeeding steel piece (9) while the steel pieces are travelling;

means (63) for heating the trailing end of said preceding steel piece (8) and the leading end of said succeeding steel piece (9) up to a predetermined temperature;

means (35) for driving at least one of said preceding and following steel pieces in a direction parallel to the travel of said steel pieces to press and bond the heated trailing end surface of said preceding steel piece (8) and the heated leading end surface of said succeeding steel piece (9) together;

a carrier (20) disposed on the upstreamside of said rolling mill (4) and carrying said holding means (21, 22), heating means (63) and pressing means (35), said carrier being movable along the path of travel of said steel pieces characterized by

means (3; 42, 43) for shearing the ends of said steel pieces while said ends are held by the holding means (21, 22) and

means (45) on said carrier (20) for placing in the gap between the sheared trailing end surface of said preceding steel piece (8) and the sheared leading end surface of said succeeding steel piece (9) a metal (34) having a melting point lower than that of said steel pieces (8, 9).

7. A continuous steel hot-rolling apparatus according to Claim 6, wherein said heating means (63) comprises high-frequency heating means.

8. A continuous steel hot-rolling apparatus according to Claim 6, further including means (30) on said carrier (20) for expelling the crops severed from said steel pieces away from the path of travel of said steel pieces.

9. A continuous steel hot-rolling apparatus according to Claim 6, further including accumulating means (200) disposed between said carrier (20) and the inlet of said rolling mill (4) for storing predetermined length of said preceding steel piece (8) thereby to absorb the difference between the speed at which said preceding steel piece is drawn into said rolling mill and the speed at which said carrier is moved.

**Patentansprüche**

1. Verfahren zum kontinuierlichen Warmwalzen von Stahl, wobei Stahlstücke, die jeweils vorbestimmte Länge aufweisen und auf hoher Temperatur gehalten werden, aufeinanderfolgend hintereinander miteinander verbunden werden unter Bildung einer kontinuierlichen Reihe von Stahlstücken, die in einem Walzgerüst kontinuierlich gewalzt werden, wobei das Verfahren folgende Schritte aufweist:

nahes Aneinanderbringen des hinteren Endes eines vorlaufenden warmen Stahlstücks und des vorderen Endes eines folgenden warmen Stahlstücks, während die Stahlstücke aufstromseitig vom Walzgerüst laufen;

Erwärmen des hinteren Endes des vorlaufenden und des vorderen Endes des folgenden Stahlstücks auf eine gewünschte Temperatur;

Anpressen der erwärmten Vorderendfläche des folgenden Stahlstücks an die erwärmte Hinterendfläche des vorlaufenden Stahlstücks unter Verbinden der Stahlstücke, so daß eine kontinuierliche Reihe von Stahlstücken gebildet wird; und

Führen der kontinuierlichen Reihe der Stahlstücke in das Walzgerüst, so daß die Stahlstücke kontinuierlich gewalzt werden, gekennzeichnet durch

Abschneiden des Hinterendes des vorlaufenden Stahlstücks und des Vorderendes des folgenden Stahlstücks, während beide nahe aneinander gehalten sind; und

Anordnen eines Metalls mit niedrigerem Schmelzpunkt als die Stahlstücke vor dem Anpreßschritt zwischen die beschnittene Hinterendfläche des vorlaufenden Stahlstücks und die beschnittene Vorderendfläche des folgenden Stahlstücks.

2. Verfahren zum kontinuierlichen Warmwalzen von Stahl nach Anspruch 1, wobei der Abschneidschritt, der Erwärmungsschritt und der Anpreßschritt bei laufenden Stahlstücken durchgeführt werden.

3. Verfahren zum kontinuierlichen Warmwalzen von Stahl nach Anspruch 1, wobei die beschnittenen Enden der Stahlstücke auf eine Temperatur zwischen 1250 und 1450°C erwärmt werden.

4. Verfahren zum kontinuierlichen Warmwalzen von Stahl nach Anspruch 1, wobei zum Erwärmen der beschnittenen Enden der Stahlstücke Hochfrequenzerwärmung angewandt wird.

5. Verfahren zum kontinuierlichen Warmwalzen von Stahl nach Anspruch 1, ferner umfassend den Schritt: Aufspeichern einer vorbestimmten Länge des vorlaufenden Stahlstücks an der Aufstromseite des Walzgerüsts, um die Differenz zwischen der Geschwindigkeit, mit der das vorlaufende Stahlstück in das Walzgerüst einläuft, und der Geschwindigkeit, mit der die Stahlstücke während des Verbindens bewegt werden, zu absorbieren.

6. Vorrichtung zum kontinuierlichen Warmwalzen von Stahl, in der eine Mehrzahl Stahlstücke (8, 9), die jeweils vorbestimmte Länge haben und auf einer hohen Temperatur gehalten werden, nacheinander miteinander verbunden werden unter Bildung einer kontinuierlichen Reihe von Stahlstücken zum kontinuierlichen Walzen in einem Walzgerüst, wobei die Vorrichtung aufweist:

Stahlstückhalterungen (21, 22), die das hintere Ende eines vorlaufenden Stahlstücks (8) und das vordere Ende eines folgenden Stahlstücks (9) bei laufenden Stahlstücken haltern;

Mittel (63) zum Erwärmen des hinteren Endes des vorlaufenden Stahlstücks (8) und des vorderen Endes des folgenden Stahlstücks (9) auf eine vorbestimmte Temperatur;

Mittel (35) zum Antreiben wenigstens des vorlaufenden und/oder des folgenden Stahlstücks in einer Richtung parallel zur Laufrichtung der Stahlstücke, um die erwärmte hintere Endfläche des vorlaufenden Stahlstücks (8) und die erwärmte vordere Endfläche des folgenden Stahlstücks (9) aneinanderzupressen und zu verbinden;

eine Trägereinheit (20), die aufstromseitig vom Walzgerüst (4) angeordnet ist und die Halterungen (21, 22), die Erwärmungsmittel (63) und die Anpreßmittel (35) trägt, wobei die Trägereinheit entlang der Bewegungsbahn der Stahlstücke bewegbar ist, gekennzeichnet durch

Mittel (3; 42, 43) zum Abschneiden der Enden der Stahlstücke, während die Enden von den Halterungen (21, 22) gehalten sind, und

Mittel (45) an der Trägereinheit (20), um in dem Zwischenraum zwischen der beschnittenen hinteren Endfläche des vorlaufenden Stahlstücks (8) und der beschnittenen vorderen Endfläche des folgenden Stahlstücks (9) ein Metall (34) anzuordnen, dessen Schmelzpunkt niedriger als derjenige der Stahlstücke (8, 9) ist.

7. Vorrichtung zum kontinuierlichen Warmwalzen von Stahl nach Anspruch 6, wobei die Erwärmungsmittel (63) Hochfrequenzerwärmungsmittel umfassen.

8. Vorrichtung zum kontinuierlichen Warmwalzen von Stahl nach Anspruch 6, ferner umfassend an der Trägereinheit (20) vorgesehene Mittel (30) zum Entfernen der von den Stahlstücken abgeschnittenen Schopfenden aus der Laufbahn der Stahlstücke.

9. Vorrichtung zum kontinuierlichen Warmwalzen von Stahl nach Anspruch 6, ferner umfassend Speichermittel (200) zwischen der Trägereinheit (20) und dem Einlauf des Walzgerüsts (4) zum Aufspeichern einer vorbestimmten Länge des vorlaufenden Stahlstücks (8), um dadurch die Differenz zwischen der Geswindigkeit, mit der das vorlaufende Stahlstück in das Walzgerüst gezogen wird, und der Geschwindigkeit, mit der die Trägereinheit bewegt wird, zu absorbieren.

**Revendications**

1. Procédé de laminage à chaud d'acier en continu, selon lequel on réunit successivement en série des pièces d'acier, préparées chacune avec une longueur prédéterminée et maintenues à une température élevée, pour former un train continu de pièces d'acier pour la mise en oeuvre d'un laminage en continu dans un laminoir, le procédé incluant les étapes consistant à:

amener l'extrémité arrière d'une pièce d'acier chaude précédente et le bord avant d'une pièce d'acier chaude suivante à proximité directe l'une de l'autre, alors que lesdites pièces d'acier se déplacent sur le côté amont dudit laminoir;

chauffer l'extrémité arrière de ladite pièce d'acier précédente et l'extrémité avant de ladite pièce d'acier suivante à une températuce désirée;

appliquer sous pression la surface d'extrémité avant chauffée de ladite pièce d'acier suivante contre la surface d'extrémité arrière chauffée de ladite pièce d'acier précédente de manière à réunir lesdites pièces d'acier pour former ainsi un train continu de pièces d'acier; et

faire pénérer ledit train continu desdites pièces d'acier dans ledit laminoir, de manière à réaliser un laminage en continu desdites pièces d'acier; caractérisé en ce

qu'on cisaille la partie d'extrémité arrière de ladite pièce d'acier précédente et la partie d'extrémité avant de ladite pièce d'acier suivante tout en les maintenant à proximité directe l'une de l'autre; et

avant ladite étape d'application sous pression, on place un métal, dont le point de fusion est inférieur au point de fusion desdites pièces d'acier, entre la surface d'extrémité arrière cisaillée de ladite pièce d'acier précédente et la surface d'extrémité avant cisaillée de ladite pièce d'acier suivante.

2. Procédé de laminage à chaud d'acier en continu selon la revendication 1, selon lequel ladite étape de cisaillement, ladite étape de chauffage et ladite étape d'application sous pression sont exécutées alors que lesdites pièces d'acier se déplacent.

3. Procédé de laminage à chaud d'acier en continu selon la revendication 1, selon lequel on chauffe les parties d'extrémité cisaillées desdites pièces d'acier à une température comprise entre 1250 et 1450°C.

4. Procédé de laminage à chaud d'acier en continu selon la revendication 1, selon lequel on utilise un chauffage à haute fréquence pour chauffer les parties d'extrémité cisaillées desdites pièces d'acier.

5. Procédé de laminage à chaud d'acier en continu selon la revendication 1, incluant en outre l'étape consistant à stocker une longueur prédéterminée de ladite pièce d'acier précédente sur le côté amont du laminoir pour absorber la différence entre la vitesse, à laquelle ladite pièce d'acier précédente est introduite dans ledit laminoir, et le vitesse, à laquelle lesdites pièces d'acier se déplacent pendant leur réunion.

6. Dispositif de laminage à chaud d'acier en continu permettant de réunir successivement plusieurs pièces d'acier (8, 9), préparées chacune avec une longueur prédéterminée et maintenues à une température élevée de manière à former un train continu des pièces d'acier pour réaliser un laminage en continu à l'aide d'un laminoir, ledit dispositif incluant:

des moyens (21, 22) de maintien des pièces d'acier, servant à maintenir l'extrémité arrière d'une pièce d'acier précédente (8) et l'extrémité avant d'une pièce d'acier suivante (9), alors que les pièces d'acier se déplacent;

des moyens (63) pour chauffer l'extrémité arrière de ladite pièce d'acier précédente (8) et l'extrémité avant de ladite pièce d'acier suivante (9) jusqu'à une température prédéterminée;

des moyens (35) servant à entraîner au moins l'une desdites pièces d'acier précédente et suivante dans une direction parallèle à la direction de déplacement des pièces d'acier de manière à appliquer sous pression l'une contre l'autre et réunir la surface d'extrémité arrière chauffée de ladite pièce d'acier précédente (8) et la surface d'extrémité avant chauffée de ladite pièce d'acier suivante (9);

un support (20) disposé sur le côté amont dudit laminoir (4) et portant lesdits moyens de maintien (21, 22), lesdits moyens de chauffage (63) et lesdits moyens d'application sous pression (35), ledit support étant déplaçable le long du trajet de déplacement desdites pièces d'acier, caractérisé par

des moyens (3; 42, 43) servant à cisailler les extrémités desdites pièces d'acier, alors que ces extrémités sont maintenues par les moyens de maintien (21, 22), et

des moyens (45) situés sur ledit support (20) pour disposer un métal (34) possédant un point de fusion inférieur à celui des pièces d'acier (8, 9), dans l'espace présent entre la surface d'extrémité arrière cisaillée de ladite pièce d'acier précédente (8) et la surface d'extrémité avant cisaillée de ladite pièce d'acier suivante (9).

7. Dispositif de laminage à chaud d'acier en continu selon la revendication 6, selon lequel lesdits moyens de chauffage (63) comprennent des moyens de chauffage à haute fréquence.

8. Dispositif de laminage à chaud d'acier en continu selon la revendication 6, comprenant en outre des moyens (30) situés sur ledit support (20) pour évacuer du trajet de déplacement desdites pièces d'acier, les chutes séparées desdites pièces d'acier.

9. Dispositif de laminage d'acier en continu selon la revendication 6, incluant en outre des moyens d'accumulation (200) disposés entre ledit support (20) et l'entrée dudit laminoir (4) pour stocker une longueur prédéterminée de ladite pièce d'acier précédente (8), de manière à absorber la différence entre la vitesse, à laquelle ladite pièce d'acier précédente est introduite dans le laminoir, et la vitesse, à laquelle ledit support est déplacé.

# FIG. 1

# FIG. 2

FIG. 3

EP 0 135 133 B1

# F I G . 4

# F I G. 5

# F I G. 6

EP 0 135 133 B1

# FIG.7

63

8        9

# FIG.8

15m

20,20b    1.5m

3m/min

10m

4

60m/min

V₂

V₂

9          8

12    41    200

# FIG.9